# EUROPÄISCHE PATENTSCHRIFT

(11) **EP 0 969 987 B1**
(45) Veröffentlichungstag und Bekanntmachung des Hinweises auf die Patenterteilung: **25.09.2002**
(21) Anmeldenummer: 98925433.9
(22) Anmeldetag: 16.03.1998
(51) Int. Cl.: B60R 13/00, B60R 21/20, G09F 7/18

(54) **AUF EINER GRUNDPLATTE BEFESTIGTE PLAKETTE**
PLATELET FIXED ON A BASE PLATE
PLAQUETTE FIXEE SUR UNE PLAQUE DE BASE

(30) Priorität: 24.03.1997 DE 29706136 U
(43) Veröffentlichungstag der Anmeldung: 12.01.2000
(73) Patentinhaber: TAKATA - PETRI Aktiengesellschaft, 63743 Aschaffenburg (DE)
(72) Erfinder: BURDACK, Harald, D-63808 Haibach (DE); ZERBE, Manfred, D-63739 Aschaffenburg (DE)
(74) Vertreter: Bärmann, Klaus, Dipl.-Ing.
(86) Internationale Anmeldenummer: DE9800854
(87) Internationale Veröffentlichungsnummer: WO98042538

(56) Entgegenhaltungen:
- EP-A- 0 742 123
- DE-U- 9 402 922
- DE-U- 29 617 721
- US-A- 5 529 336

## Beschreibung

Die Erfindung betrifft eine auf einer Grundplatte befestigte Plakette nach dem Oberbegriff des Anspruchs 1.

Plaketten werden in vielfältiger Form zur Kennzeichnung und zur Verzierung von Produkten, z.B. von Automobilen verwendet. Insbesondere ist es auch üblich, die Abdeckkappen von Fahrerairbags mit einer Plakette zu versehen. So ist aus dem gattungsbildenden DE 296 07 951 U1 eine Anordnung bekannt, bei der die Plakette, die dort als Emblem bezeichnet ist, auf einem Plättchen befestigt ist. Es ist vorgesehen, daß das Emblem durch Emallieren der Plättchenoberfläche gebildet wird oder daß es sich auf einem Träger befindet, der auf dem Plättchen aufgeklebt ist.

Diese Anordnung ist insbesondere für das Befestigen flächenförmiger Embleme geeignet, bei denen eine große Kontaktfläche zur Verfügung steht. Diese Anordnung ist jedoch nicht für Plaketten geeignet, die dreidimensionale schmale Abschnitte aufweisen, so daß kaum Klebeflächen zur Verfügung stehen.

Der Erfindung liegt die Aufgabe zugrunde, eine Plakette mit dreidimensionalen schmalen Abschnitten sicher auf einer Unterlage zu befestigen.

Erfindungsgemäß wird das gemäß den Merkmalen des Anspruchs 1 erreicht.

Eine auf einer Grundplatte befestigte Plakette, insbesondere mit dreidimensionalen schmalen Abschnitten und insbesondere zur Verwendung auf Abdeckkappen von Fahrerairbagmodulen, ist erfindungsgemäß dadurch gekennzeichnet, daß die Plakette auf der Rückseite mit mindestens eine Erhebung als Energierichtungsgeber für eine Schweißverbindung mit der Grundplatte versehen ist. Die Erhebung weist vorzugsweise einen zur Grundplatte hin spitz zulaufenden Querschnitt auf und verläuft linienförmig entsprechend der Plakettenstruktur. Der linienförmige Verlauf der Erhebung kann sowohl durchgehend als auch unterbrochen sein.

Diese Ausbildung der Plakette weist den Vorteil auf, daß mittels der Erhebungen selbst filigrane Plaketten mit stark dreidimensionalem Effekt durch Schweißen sicher mit einer Grundplatte verbunden werden können, ohne daß die Plakette überhitzt und dabei beschädigt wird. Die sichere Verbindung gewährleistet, daß die Plakette im Crashfall nicht von der Abdeckkappe eines Airbags abreißt. Die abreißende Plakette könnte den Insassen gefährden.

Die Erzielung einer einwandfreien Schweißverbindung mittels eines bekannten Schweißverfahrens ist mit einer glatten Oberfläche der Grundplatte möglich. Um zu verhindern, daß bei schmalen Stegen Schweißgut seitlich sichtbar hervortritt kann es vorteilhaft sein, daß jeder Erhebung auf der Grundplatte eine Nut zugeordnet ist. Die Nut sollte eine waagerechte Grundfläche mit senkrecht dazu verlaufende Seitenflächen und vorzugsweise einen zumindest nahezu rechteckförmigen Querschnitt aufweisen.

Die Grundplatte und die Plakette bestehen vorteilhaft aus demselben Werkstoff und insbesondere aus Kunststoff.

Auf der Rückseite der Grundplatte ist zweckmäßig mindestens ein Befestigungsdom zur Befestigung der Grundplatte auf einer Unterlage vorgesehen. Zur Ausstattung der Abdeckkappe eines Airbagmoduls mit einer Plakette ist die Grundplatte mittels des Befestigungsdoms durch Schweißen mit der Abdeckkappe des Airbagmoduls verbunden.

Die Plakette aus Kunststoff ist zur Erzielung einer gewünschten Oberfläche oberflächenbeschichtet und mit einem kratzfesten Schutzlack versehen.

Die Erfindung soll in einem Ausführungsbeispiel anhand von Zeichnungen erläutert werden. Es zeigen:
- Fig. 1: eine Draufsicht auf eine Grundplatte mit Plakette;
- Fig. 2: einen Schnitt durch die Fig. 1 in Richtung der Pfeile A - A gesehen;
- Fig. 3: den Schnitt nach Fig. 2 mit getrennt dargestellter Plakette und Grundplatte;
- Fig. 4: die Einzelheit X der Fig. 3;
- Fig. 5: eine Einzelheit einer Ausführungsform, bei der der Erhebung in der Plakette eine Vertiefung in der Grundplatte zugeordnet ist.

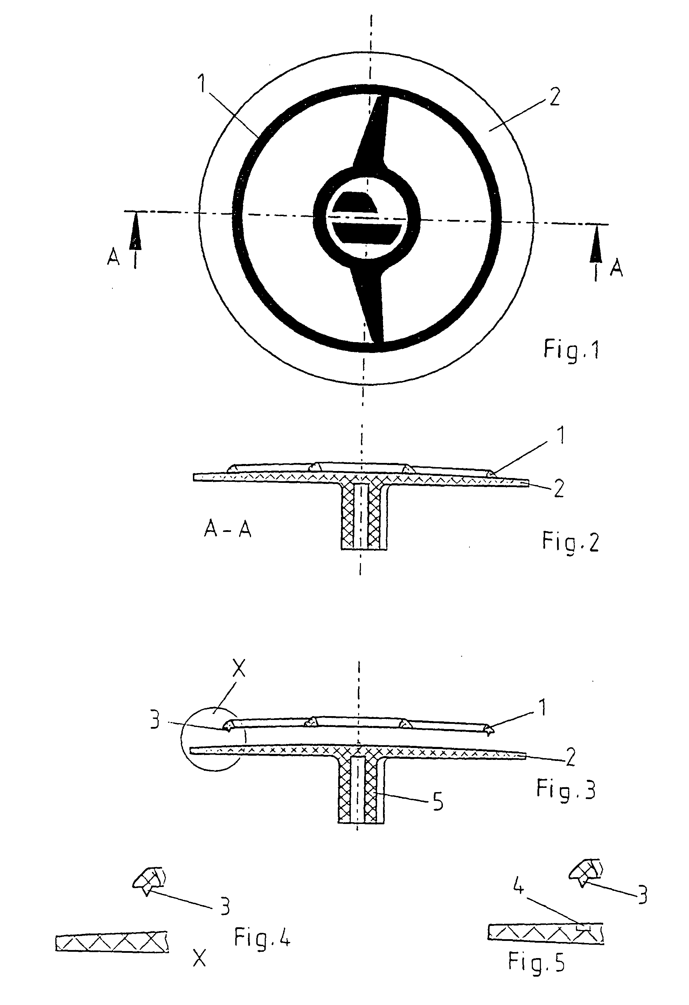

Die in der Fig. 1 in der Draufsicht dargestellte Plakette 1 soll auf der zugeordneten Grundplatte 2 befestigt werden. Die Plakette ist in einem vergrößerten Maßstab dargestellt, d.h. die Abschnitte der Plakette sind noch schmaler als sie dort dargestellt sind. Aus der Fig. 2 ist ersichtlich, daß die Plakette dreidimensonal ist. Aus den Figuren 3 und 4 ist erkennbar, daß die Plakette auf der Rückseite der Oberfläche der Grundplatte 2 angepaßt ist und daß sie Erhebungen 3 aufweist. Die Erhebungen verlaufen linienförmig entsprechend dem in Fig. 1 dargestellten Verlauf der Plakette. Wie aus den Figuren 3 und 4 ersichtlich ist, weist die Erhebung einen zur Grundplatte hin spitz zulaufenden Querschnitt auf, so daß sie die Grundplatte linienförmig berührt.

Die Verbindung der Plakette mit der Grundplatte erfolgt in der Weise, daß die Plakette auf die Grundplatte aufgesetzt wird, wobei die Erhebung die Grundplatte linienförmig berührt. Zusätzlich können für die Zentrierung während des Aufsetzens nicht dargestellte Stifte und Löcher vorgesehen sein. Beim anschließenden Schweißvorgang mittels eines bekannten Schweißverfahrens erfolgt ein Wärmeübergang nur über die Erhebungen, so daß dort die Plakette mit der Grundplatte verschweißt wird. Das Verschweißen im Bereich der Erhebungen gewährleistet eine qualitativ gute Verbindung, ohne daß die filigranen Strukturen der Plakette beeinträchtigt werden. Die Plakette kann zusammen mit der Grundplatte oberflächenbehandelt werden. Beide können aber auch vor dem Verschweißen getrennt oberflächenbehandelt werden, so daß sie problemlos eine unterschiedliche Oberflächenstruktur erhalten können.

Beim Ausführungsbeispiel der Fig. 5 ist der Erhebung 3 der Plakette eine Nut 4 auf der Grundplatte 2 zugeordnet. Es ist erkennbar, daß die Nut 4 einen annähernd rechteckförmigen Querschnitt hat. Deshalb liegt auch in diesem Fall die Plakette vor dem Verschweißen mit der Grundplatte 2 nur mit den Erhebungen auf dieser auf. Die Nut, die an jeder Erhebung vorgesehen ist, erlaubt ein problemloses Verschweißen von Plaketten mit schmalen Stegen, ohne daß Schweißgut seitlich sichtbar hervortritt.

Die Grundplatte 2 ist an der Unterseite mit einem Befestigungsdom 5 versehen, der an die Grundplatte 2 angespritzt ist. Mit dessen Hilfe kann die Grundplatte 2 durch ein bekanntes schweißtechnisches oder anderes thermisches Verfahren mit einer Unterlage, z. B. mit einer Abdeckkappe eines Airbagmoduls verbunden werden.

## Patentansprüche

1. Auf einer Grundplatte befestigte Plakette, insbesondere mit dreidimensionalen schmalen Abschnitten und insbesondere zur Verwendung auf Abdeckkappen von Fahrerairbagmodulen,
**dadurch gekennzeichnet,**
**daß** die Plakette (1) auf der Rückseite mindestens eine Erhebung (3) als Energierichtungsgeber für eine Schweißverbindung mit der Grundplatte (2) aufweist.

2. Plakette nach Anspruch 1, **dadurch gekennzeichnet, daß** die Erhebung einen zur Grundplatte hin spitz zulaufenden Querschnitt aufweist.

3. Plakette nach Anspruch 1 oder 2 , **dadurch gekennzeichnet, daß** die Erhebung (3) linienförmig entsprechend der Plakettenkontur verläuft.

4. Plakette nach mindestens einem der vorhergehenden Ansprüche, **dadurch gekennzeichnet, daß** ein unterbrochener linienförmiger Verlauf der Erhebung vorgesehen ist.

5. Plakette nach mindestens einem der vorhergehenden Ansprüche, **dadurch gekennzeichnet, daß** jeder Erhebung (3) auf der Grundplatte (2) eine Nut (4) zugeordnet ist.

6. Plakette nach Anspruch 5, **dadurch gekennzeichnet, daß** die Nut (4) eine waagerechte Grundfläche aufweist.

7. Plakette nach Anspruch 5 oder 6, **dadurch gekennzeichnet, daß** die Nut einen zumindest nahezu rechteckförmigen Querschnitt aufweist.

8. Plakette nach mindestens einem der vorhergehenden Ansprüche, **dadurch gekennzeichnet, daß** die Grundplatte (2) und die Plakette (1) aus demselben Werkstoff bestehen.

9. Plakette nach mindestens einem der vorhergehenden Ansprüche, **dadurch gekennzeichnet, daß** die Grundplatte (2) und die Plakette (1) aus Kunststoff bestehen.

10. Plakette nach mindestens einem der vorhergehenden Ansprüche, **dadurch gekennzeichnet, daß** die Plakette (1) oberflächenbeschichtet ist und mit einem kratzfesten Schutzlack versehen ist.

11. Plakette nach mindestens einem der vorhergehenden Ansprüche, **dadurch gekennzeichnet, daß** auf der Rückseite der Grundplatte (2) mindestens ein Befestigungsdom (5) zur Befestigung der Grundplatte (2) auf einer Unterlage vorgesehen ist.

12. Plakette nach mindestens einem der vorhergehenden Ansprüche, **dadurch gekennzeichnet, daß** die Grundplatte (2) mittels des Befestigungsdoms (5) durch Schweißen mit der Abdeckkappe eines Airbagmoduls verbunden ist.

## Claims

1. Platelet fixed on a base plate, more particularly with three dimensional narrow sections and more particularly for use on cover caps of driver airbag modules,
**characterised in that**
the platelet (1) has on the back at least one protrusion (3) as a power direction indicator for a welding connection with the base plate (2).

2. Platelet according to claim 1 **characterised in that** the protrusion has a cross-section tapering acutely towards the base plate.

3. Platelet according to claim 1 or 2 **characterised in that** the protrusion (3) runs linearly corresponding to the contour of the platelet.

4. Platelet according to at least one of the preceding claims **characterised in that** an interrupted linear path of the protrusion is provided.

5. Platelet according to at least one of the preceding claims **characterised in that** each protrusion (3) on the base plate (2) is allotted a groove (4).

6. Platelet according to claim 5 **characterised in that** the groove (4) has a horizontal base surface.

7. Platelet according to claim 5 or 6 **characterised in that** the groove has an at least approximately rectangular cross-section.

8. Platelet according to at least of the preceding claims **characterised in that** the base plate (2) and the platelet (1) consist of the same material.

9. Platelet according to at least one of the preceding claims **characterised in that** the base plate (2) and the platelet (1) are made of plastics.

10. Platelet according to at least one of the preceding claims **characterised in that** the platelet (1) is surface coated and provided with a scratch-resistant protective lacquer.

11. Platelet according to at least one of the preceding claims **characterised in that** at least one fixing dome (5) is provided on the back of the base plate (2) for fixing the base plate (2) on a support backing.

12. Platelet according to at least one of the preceding claims **characterised in that** the base plate (2) is connected to the cover cap of an airbag module by welding by means of the fixing dome (5).

## Revendications

1. Plaquette fixée sur une plaque de base, en particulier avec des petits tronçons à trois dimensions et en particulier pour être utilisée sur des couvercles de modules d'airbag de conducteur, **caractérisée en ce que** la plaquette (1) présente sur la face postérieure au moins un relief (3) servant de capteur de direction d'énergie pour une liaison par soudure avec la plaque de base (2).

2. Plaquette selon la revendication 1, **caractérisée en ce que** le relief présente une section transversale pointue en direction de la plaque de base.

3. Plaquette selon l'une ou l'autre des revendications 1 et 2, **caractérisée en ce que** le relief (3) s'étend en forme linéaire selon le contour de la plaquette.

4. Plaquette selon au moins l'une des revendications précédentes, **caractérisée en ce qu'**il est prévu un tracé en forme linéaire interrompu pour le relief.

5. Plaquette selon au moins l'une des revendications précédentes, **caractérisée en ce qu'**une rainure (4) est associée à chaque relief (3) sur la plaque de base (2).

6. Plaquette selon la revendication 5, **caractérisée en ce que** la rainure (4) présente une surface de base horizontale.

7. Plaquette selon l'une ou l'autre des revendications 5 ou 6, **caractérisée en ce que** la rainure présente une section transversale au moins presque rectangulaire.

8. Plaquette selon au moins l'une des revendications précédentes, **caractérisée en ce que** la plaque de base (2) et la plaquette (1) sont constituées du même matériau.

9. Plaquette selon au moins l'une des revendications précédentes, **caractérisée en ce que** la plaque de base (2) et la plaquette (1) sont constituées de matière plastique.

10. Plaquette selon au moins l'une des revendications précédentes, **caractérisée en ce que** la plaquette (1) est revêtue en surface et **en ce qu'**elle est dotée d'une laque de protection antirayures.

11. Plaquette selon au moins l'une des revendications précédentes, **caractérisée en ce qu'**il est prévu sur la face postérieure de la plaque de base (2) au moins un dôme de fixation (5) pour fixer la plaque de base (2) sur un support.

12. Plaquette selon au moins l'une des revendications précédentes, **caractérisée en ce que** la plaque de base (2) est reliée au couvercle d'un module d'airbag par soudure au moyen du dôme de fixation (5).
